# EUROPEAN PATENT APPLICATION

(11) **EP 1 577 362 A1**
(43) Date of publication of application: **21.09.2005**
(21) Application number: 03738572.1
(22) Date of filing: 30.06.2003
(51) Int. Cl.: C09K 5/00, C08G 65/332, B32B 27/00, D01F 8/04, C08L 101/00, F28F 21/06

(54) **HEAT-STORAGE MATERIAL, COMPOSITION THEREFOR, AND USES OF THESE**

(30) Priority: 12.07.2002 JP 2002204591
(71) Applicant: IDEMITSU KOSAN CO., LTD., Tokyo 100-8321 (JP); Idemitsu Technofine Co. Ltd, Tokyo 130-0015 (JP)
(72) Inventor: ABE, Kazuaki, Sodegaura-shi, Chiba 299-0293 (JP); SANO, Masahiro, Sodegaura-shi, Chiba 299-0293 (JP)
(74) Representative: Gille Hrabal Struck Neidlein Prop Roos
(86) International application number: PCT/JP2003/008265
(87) International publication number: WO 2004/007631

(57) **Abstract**

A heat-accumulative material which is a polymer or oligomer having, as a main constituent component, units having a polyether main chain and a side chain, side chains capable of being crystallized, and heat-accumulative composition comprising the same heat-accumulative material. The heat-accumulative material tends to be kept at a constant temperature more effectively by absorbing heat as ambient temperature increases to melt, and releasing heat as ambient temperature decreases to solidify, to moderate changes in ambient temperature, and thereby to exhibit the function as a heat-accumulative material. They have a sufficiently high viscosity, preventing the heat-accumulative material from flowing out even when it is molten. Each of the heat-accumulative material and composition can be made into a heat-accumulative film or sheet, laminate, molded article, composite fiber and cloth which can be suitably used around a body.

## Description

### Technical Field

The present invention relates to a heat-accumulative material, a composition thereof, and a heat-accumulative film or sheet, laminate, composite fiber, cloth and molded article of the above material or composition.

### Background Art

Heretofore, clothes worn in an atmosphere of widely varying temperatures, e.g., clothes for cold weather or sporting, have been made of various materials for improving heat insulation.

Examples of the clothes developed so far include clothes using various cotton materials or feathers as heat-insulating materials, clothes in which a radiant heat reflecting film such as a aluminum film is introduced, and clothes made of materials which generate heat on absorbing moisture.

Furthermore, to provide a temperature-controlling function for the change of ambient temperatures, heat-accumulative materials have been used.

An example of such heat-accumulative materials is a low-molecular weight crystallizable compound such as octadecane, and its phase change heat (fusion or solidification) is utilized to adjust the temperature.

Such a compound, although having a large latent heat, has a sufficiently reduced viscosity and increased fluidity, when molten, to cause problems of leakage or spillage. Another problem involved in the compound is evaporation resulting from its low molecular weight and hence a low boiling point, when the compound is processed at an elevated temperature.

Attempts have been made to seal the low-molecular-weight compound in microcapsules, as disclosed in, e.g., Japanese Patent Laid-open Publication Nos. 58-55699, 1-85374 and 2-182980. More specifically, the microcapsules containing a low-molecular-weight compound are spread and fixed on a cloth, or a synthetic resin containing the microcapsules is spun into fibers, which are woven into the cloth. These products have been already realized.

However, the techniques which use these microcapsules involve the following problems:
(1) The microcapsules cannot exhibit their function, because of difficulty in uniformly attaching them to the base material.
(2) The microcapsules, although capable of improving heat insulation, may damage comfortableness of the clothes, when put thereon via an adhesive agent, because of possible adverse effects of the binder on their moisture retention.
(3) The microcapsules, having structurally a certain size, are difficult to form into a thin film, when they are made into a film or sheet.
(4) The microcapsule material is already colored.
(5) The microcapsules may give off formaldehyde.
(6) The microcapsules have poor fabricability, when to be made into a film or sheet, because they may be broken by pressure or the like, and will cause, when broken, leakage of the molten liquid which they hold.
(7) An adhesive agent used for fixing the microcapsules to cloth may harden the cloth, or deteriorate its texture or moisture-permeability required for cloth, with the result that the clothes thereof will have deteriorated functions.
(8) Grain size of the microcapsules is large to possibly cause problems, e.g., yarn cutting during the spinning or weaving process.

On the other hand, heat-accumulative polymers which utilize phase change of the main chain have been developed, as disclosed by, e.g., Japanese Patent Laid-open Publication Nos. 57-76078 and 58-277773.

However, the heat-accumulative polymers falling into this category are too high in melting point to be practical. For example, high-density polyethylene has a melting point of 110 to 130°C. Moreover, it is difficult to control their melting point. Still more, these polymers become fluid at temperature above their melting point, to collapse the molded article thereof.

Japanese Patent Laid-open Publication No. 8-311716 proposes a composite fiber with a core made of a composition of paraffin wax and polyethylene resin as heat-accumulative materials.

However, the composite fiber with the core of paraffin wax composition causes production-related problems resulting from scattering of the wax under heating during the wax incorporation or composite fiber production process, with the result that it may not sufficiently exhibit its heat-accumulative capacity.

Such heat accumulative materials are used for various proposes at present.

Japanese Patent Laid-open Publication No. 5-214328, for example, discloses a heat-accumulative material of alpha-olefin of 18 to 28 carbon atoms, describing an energy-saving type heating system in which heat of solidification of the heat-accumulative material is utilized as one of the applications.

Japanese Patent Laid-open Publication No. 8-224754 proposes heat-insulated tableware, produced by multi-layer infection molding, with a heat-accumulative material contained in a microcapsule of fluorine or silicone resin.

Japanese Patent Laid-open Publication No. 9-174741 proposes a composite heat-insulating panel which incorporates a heat-accumulative material showing phase change in a temperature range from 0 to 30°C for preventing condensation of moisture in air.

More recently, Japanese Patent Laid-open Publication No. 2002-114553 proposes a cement-based building material of heat-accumulative structure which incorporates microcapsules of a latent heat accumulative material.

Japanese Patent No. 3,306,482 proposes a heat exchanger or the like which comprises powdered paraffin wax as latent heat accumulative material.

Japanese Patent Laid-open Publication No. 2002-211967 proposes a temperature- and humidity-controlling material containing microcapsules which hold a latent heat accumulative material, and temperature- and humidity-controlling foam which incorporates the material.

However, the techniques disclosed by the above publications involve following disadvantages.
(1) A common plastic molding system, e.g., injection, blow or compression molding system, may not effectively give a desired product, because it can collapse the microcapsules under pressure.
(2) When a paraffin-based material is used, the product may not effectively exhibit heat-accumulative effect, because of evaporation of the heat-accumulative component during the molding process.
(3) The heat-accumulative material is too high in phase-change temperature to be practical.

It is an object of the present invention to provide a heat-accumulative material, a heat-accumulative composition, and heat-accumulative film or sheet, laminate, composite fiber, cloth and molded article using the above material and composition, which are easily fabricated and excellent in heat-accumulative capacity, in consideration of the above problems involved in the conventional techniques.

### Disclosure of the Invention

The present invention provides the following heat-accumulative materials and the like.
[1] A heat-accumulative material which is a polymer or oligomer having, as a main constituent component, units having a polyether main chain and a side chain, side chains capable of being crystallized.
[2] The heat-accumulative material according to [1], wherein the unit is represented by formula (1) or (2), 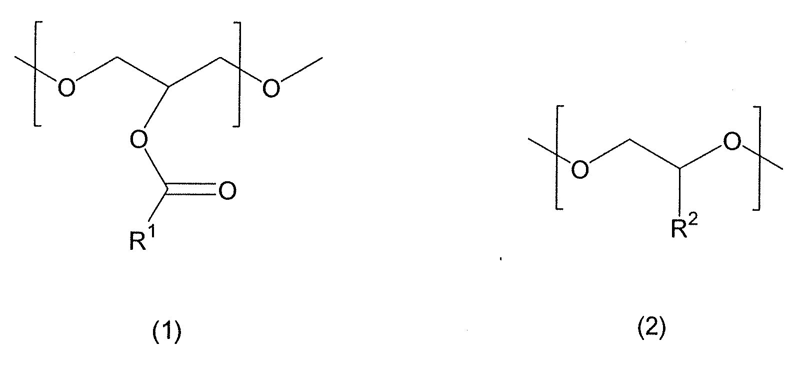 wherein R¹ is at least one selected from hydrocarbon groups having 11 or more carbon atoms and R² is at least one selected from hydrocarbon groups having 14 or more carbon atoms.
[3] The heat-accumulative material according to [2], wherein R¹ or R² is a straight-chain alkyl group.
[4] The heat-accumulative material according to any one of [1] to [3], whose melting point is from -10°C to 100°C and latent heat is at least 30 J/g.
[5] The heat-accumulative material according to any one of [1] to [4], wherein difference between the melting point and the solidifying point of the material is at most 15°C.
[6] The heat-accumulative material according to any one of [1] to [5], whose 5 weight % loss temperature in the air measured by a TG-DTA analyzer is 200°C or more.
[7] The heat-accumulative material according to any one of [1] to [6], wherein the weight-average molecular weight Mw of the polymer or oligomer is from 1,000 to 2,000,000.
[8] A heat-accumulative composition comprising the heat-accumulative material of any one of [1] to [7] and a synthetic resin.
[9] The heat-accumulative composition according to [8], wherein the synthetic resin is at least one selected from the group of polyurethane, acrylic, polyamide, polyvinyl chloride, polypropylene, polyethylene, polystyrene, polyester, polycarbonate, ethylene/vinyl alcohol copolymer, thermoplastic elastomer, polyphenylene sulfide, polyvinyl alcohol copolymers and ABS resins.
[10] A heat-accumulative film or sheet comprising the material of any one of [1] to [7]; or the composition of [8] or [9].
[11] A heat-accumulative laminate comprising the film or sheet of [10] as one layer.
[12] A heat-accumulative composite fiber comprising a core and a sheath; the core comprising the material of any one of [1] to [7]; or the composition of [8] or [9]; the sheath comprising a synthetic resin.
[13] The heat-accumulative composite fiber according to [12], wherein the synthetic resin is at least one selected from the group of polyamide, polyester, polyurethane, ethylene/vinyl acetate copolymer, polyvinylidene chloride, polyvinyl chloride, acrylic, polyethylene, ethylene vinyl alcohol copolymers, polyvinyl alcohol copolymers and polypropylene resins.
[14] A heat-accumulative cloth comprising the composite fiber of [12] or [13].
[15] A heat-accumulative molded article comprising the material of any one of [1] to [7]; or the composition of [8] or [9].
[16] The heat-accumulative molded article according to [15], which is an energy-saving part or a part for preventing excessive heating or cooling.
[17] The heat-accumulative molded article according to [15], which is a building material, residential good, automobile part, electric/electronic appliance part, heat-exchanger part, heat exchange medium or heat transfer device part.

### Best Mode for Carrying out the Invention

The present invention is described in detail below.

### [Heat-accumulative material]

The heat-accumulative material of the present invention is a polymer or oligomer (polyether heat-accumulative material) having, as a main component, units having a polyether main chain and a side chain, side chains capable of being crystallized.

This heat-accumulative material changes its phase (melting and solidification) in a desired temperature range by the aggregation and disaggregation of side chains, which is accompanied by releasing or absorbing a large latent heat. Accordingly this heat-accumulative material absorbs heat as ambient temperature increases to melt, and releases heat as ambient temperature decreases to solidify. This material can then moderate changes in ambient temperature so that it tends to be kept at a constant temperature, thereby exhibiting its function as a heat-accumulative material. Further its melting point can be easily controlled by adjusting the length of side chains.

In the heat-accumulative material of the present invention, side chains are not limited, so long as they can be crystallized.

Specifically they may be of polyglycerol type having the unit represented by formula (1) or polyalkyleneglycol type having the unit represented by formula (2), 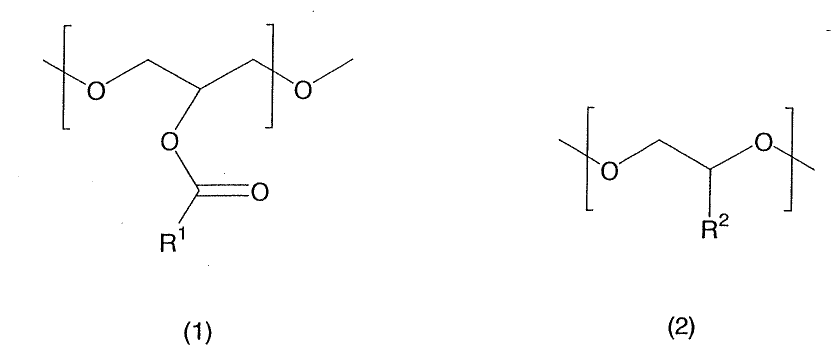 wherein R¹ is at least one selected from hydrocarbon groups having 11 or more carbon atoms and R² is at least one selected from hydrocarbon groups having 14 or more carbon atoms.

R¹ or R² is preferably a straight-chain alkyl group which has the above-mentioned number of carbon atoms. They include undecyl, dodecyl, tridecyl, tetradecyl, pentadecyl, hexadecyl, heptadecyl, octadecyl, nonadecyl, icocyl, henicocyl, dococyl, tricocyl group and the like, particularly preferably tridecyl (C13), pentadecyl (C15), heptadecyl (C17) and henicocyl (C21).

For example, when R¹ is a tridecyl group having 13 carbon atoms and R² is a tetradecyl group having 14 carbon atoms, the heat-accumulative material of the present invention has units represented by formula(3) or formula(4), respectively.

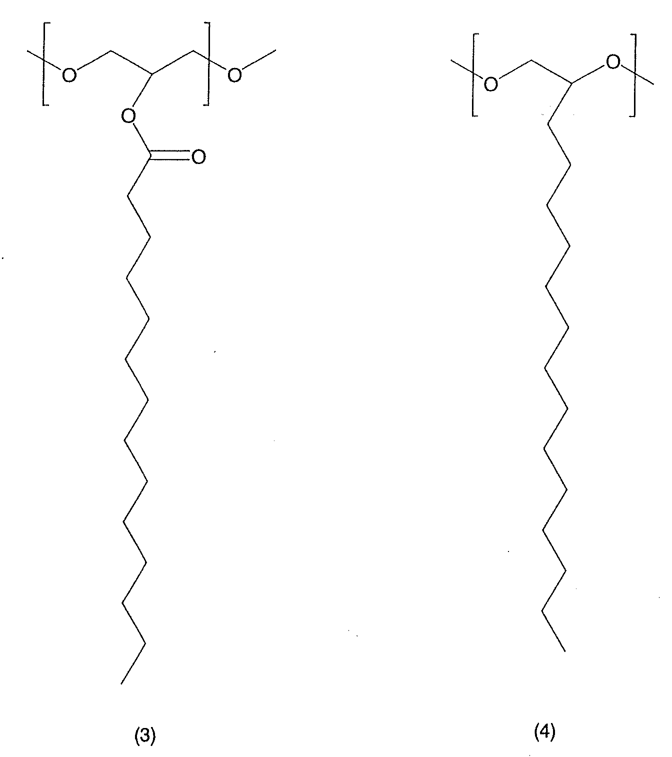

In the above structure, the main chains are not crystallized but the long side chains can be mutually crystallized in specified temperatures.

Examples of polyglycerol type heat-accumulative materials include decaglycerine-lauric acid (C12) reactants, decaglycerine-myristic acid (C14) reactants, decaglycerine-palmitic acid (C16) reactants, decaglycerine-stearic acid (C18) reactants, decaglycerine-behenic acid (C22) reactants and the like. Among them, preferred are decaglycerine-myristic acid reactants, decaglycerine-palmitic acid reactants, decaglycerine-stearic acid reactants and decaglycerine-behenic acid reactants.

Examples of polyalkyleneglycol type heat-accumulative materials include polymers of alkylene-oxide such as dodecylene-oxide, tetradecylene-oxide, hexadecylene-oxide, octadecylene-oxide and the like. Among them, preferred are polymers of hexadecylene-oxide, octadecylene-oxide and the like.

The heat-accumulative material of the present invention can exhibit a desired function by changing functional groups of the side chains so long as it is not harmful to the characteristics thereof.

For example the heat-accumulative material of the present invention, containing a long-chain hydrocarbon group as the side chain, is highly hydrophobic. However, it can have enhanced hydrophilicity when incorporated with a hydrophilic functional group like alcohol, and hence enhanced adhesion to a base or the like, when applied thereon.

The heat-accumulative material of the present invention preferably has a weight-average molecular weight Mw of 1,000 to 2,000,000, more preferably 10,000 to 1,000,000. A heat-accumulative material having an Mw value below 1,000 may give a defective product, which is insufficient in strength, and may be liquefied while in use and become sticky while in use, because of its low melting point. On the other hand, a heat-accumulative material having an Mw value above 2,000,000 may be deteriorated in spinning characteristics and moldability, because of its insufficient fluidity as a polymer.

The heat-accumulative material of the present invention preferably has a melting point, at which the side chain is transformed from the crystal state, of -10 to 100°C. The more preferable lower limit of the range is 0°C, still more preferably 10°C. The more preferable higher limit of the range is 80°C, still more preferably 50°C.

A heat-accumulative material having a melting point above 100°C is always present as solid in the common service atmosphere, and may be difficult to fully exhibit its heat-accumulative function, because absorption of the crystallization heat is no longer expected while it is being heated.

On the other hand, a heat-accumulative material having a melting point below -10°C is always present as liquid in the common service atmosphere, and may be difficult to fully exhibit its heat-accumulative function, because releasing heat is no longer expected while it is being solidified.

The difference between melting point and freezing point (solidifying point) of the heat-accumulative material of the present invention is preferably within 15°C. When the difference is beyond 15°C, the range in which they absorb and release heat will be too wide for these materials to fully exhibit their heat-accumulative function in a desired narrow temperature range.

The heat-accumulative material of the present invention preferably has a latent heat of 30 J/g or more, more preferably 50 J/g or more, still more preferably 70 J/g or more. A heat-accumulative material having a latent heat below 30 J/g may exhibit a heat-accumulative function insufficiently. Normally, it is 200 J/g or less.

The side chain in the heat-accumulative material of the present invention reversibly transforms itself into or from the crystal state in a given temperature range, while releasing or absorbing a large latent heat. The main chain, on the other hand, shows no such phase transformation.

The viscosity of the heat-accumulative material of the present invention at 75°C is preferably 20 mm²/s or more, more preferably 30 mm²/s or more. A heat-accumulative material having a viscosity below 20 mm²/s may leak out and cause troubles, e.g., making the cloth sticky.

Melting point, freezing point and latent heat are measured by differential scanning calorimetry (DSC). The melting point and freezing points mean melting and crystallization peak temperatures, respectively (JIS K-7121). The melting point is defined as a melting peak temperature observed when a sample is heated beyond temperature higher than that where melting peal is finished once, then cooled to a given temperature and reheated.

In the heat-accumulative material of the present invention, its 5 weight % loss temperature in the air measured by a TG-DTA analyzer is preferably 200°C or more, more preferably 240°C or more. Below 200°C it may evaporate during a heating and processing step. The 5 weight % loss temperature means a temperature where 5% of the total weight of heat-accumulative material is lost when it is heated.

The process for producing the heat-accumulative material of the present invention is not limited. For example, the polyglycerol type heat-accumulative material can be produced by reacting hydroxy groups which exist in polyglycerol (polyether main chain) with carboxyl groups of carboxylic acids which has a straight-chain alkyl group (side chains) by using a known esterification.

On the other hand, the polyalkyleneglycol type heat-accumulative material can be produced by ring-opening polymerization of alkylene-oxides.

As mentioned above, the heat-accumulative material of the present invention is very useful as a heat-accumulative material, because it tends to be kept at a constant temperature by absorbing heat as ambient temperature increases to melt, and releasing heat as ambient temperature decreases to solidify, to moderate changes in ambient temperature.

In addition, the heat-accumulative material of the present invention can exhibit the following advantageous effects.
(1) It is sufficiently high in molecular weight not to cause evaporation or leakage.
(2) It is a resin, and easily processable. It can be applied, kneaded into another material or made into fibers.
(3) Its melting point can be easily controlled by controlling length of side chains.
(4) By using polyether for the main chain, its bendability can be enhanced and flexibility can be added.
(5) It can have another function by changing functional groups of the side chains.
(6) It will not ooze out at the time of melting.
(7) It shows a sharper phase change than that of materials whose main chains are crystallized to exhibit heat accumulative properties.

### [Heat-accumulative composition]

The heat-accumulative composition of the present invention comprises the above heat-accumulative material incorporated in a resin (synthetic resin).

The synthetic resin for the heat-accumulative composition preferably has a melting point of 100°C or higher. More specifically, those resins useful for the present invention include polyurethane, acrylic, polyamide, polyvinyl chloride (PVC), polypropylene, polyethylene, polystyrene, polyester (e.g., PET), polycarbonate, ethylene/vinyl alcohol copolymer, thermoplastic elastomer, polyphenylene sulfide, polyvinyl alcohol copolymers and ABS resins. They may be used either individually or in combination.

Content of the heat-accumulative material varies depending on the required temperature-controlling function. However, it is preferably 5% by weight or more of the synthetic resin, more preferably 20% by weight or more, still more preferably 30% by weight or more. It may not fully exhibit its temperature-controlling function at below 5% by weight. At above 90% by weight, on the other hand, the base material may be easily hardened and turn fragile.

The heat-accumulative composition may contain an epoxy-containing acrylic polymer, allyl ether copolymer or the like as a compatibility improver. The improver can make the synthetic resin more compatible and allow to increase content of the heat-accumulative material.

Moreover, the heat-accumulative composition may contain one or more various additives so far as an additive does not harm its characteristics. The additives useful for the present invention include antioxidant, light-resistance improver, inorganic filler (e.g., calcium carbonate or talc), foaming agent (e.g., chemical foaming agent), aging inhibitor, antimicrobial agent, antifungal agent, colorant, pigment, antistatic agent, flame retardant, processing aid, stabilizer, plasticizer, cross-linking agent and reaction promoter.

The heat-accumulative composition preferably has a latent heat of 1 J/g or more in a temperature range of -10 to 100°C for its heat-accumulative function, more preferably 5 J/g or more. A heat-accumulative composition having a latent heat below 1 J/g may not fully exhibit the heat-accumulative effect. Its latent heat is still more preferably 1 J/g or more, still more preferably 5 J/g or more, preferably in a temperature range of -10 to 80°C, more preferably 0 to 50°C.

These characteristics allow the heat-accumulative composition to fully exhibit its temperature-controlling function against ambient temperature or the like.

The heat-accumulative composition may be produced by blending/kneading the heat-accumulative material and synthetic resin by a known process.

The heat-accumulative material or composition of the present has a temperature-controlling function and is suitable for controlling temperature against body temperature by direct or indirect contact.

More specifically, the heat-accumulative material and composition can be suitably used for sporting clothes (e.g., skiing wear and rain wear), winter clothes, common clothes (e.g., stockings, panty stockings, shirts and suits), bedclothes and beds (e.g., cotton thereinside), gloves, shoes, furniture, artificial leather for automobiles, food packing materials which need high- or low-temperature insulation, and building materials. When used for furniture or leather for automobiles, they can moderate rate of temperature increase by body temperature at the portion coming into direct contact with the person, making him more comfortable in summer. They are also suitable for parts and medium of heat exchangers.

### [Film or sheet]

The film or sheet of the present invention is composed of the heat-accumulative material or composition described above.

The method for forming the heat-accumulative material or composition into film or sheet is not limited, and may be selected from the known ones. More specifically, the methods include knife coating, gravure coating, spraying and dipping.

The heat-accumulative material or composition may be molded by the method for thermoplastic resins, e.g., common T-die, inflation, compression or calendaring molding, in particular when the composition contains polyvinyl chloride, polyamide, polypropylene, polyethylene, polystyrene or polyester resin.

Moreover, the heat-accumulative composition containing polyurethane, acrylic or polyamide resin can be made into film after being dissolved in a solvent. The solvents useful for producing the resin solution include dimethylformamide, methylethylketone and toluene.

The heat-accumulative material may be made into film after being finely powdered with a varying resin and then emulsified in a poor solvent, e.g., water or isopropyl alcohol.

The film or sheet of the present invention can be produced without causing evaporation or leakage, because the heat-accumulative material or composition as the starting material has a sufficiently high molecular weight. The starting material is a resin, and easily processable. It can be applied, kneaded into another material or made into fibers. In other words, the heat-accumulative material or composition can be easily made into film or sheet, in which it can be dispersed more uniformly than that produced by the conventional technique.

The heat-accumulative material may contain one or more various additives described above so far as an additive does not harm its characteristics.

The film or sheet of the present invention, containing the heat-accumulative material, generates its latent heat when the heat-accumulative material melts. More specifically, it generates a latent heat preferably of 1 J/g or more, more preferably 5 J/g or more. If its latent heat is less than 1 J/g, it may not exhibit sufficient heat accumulative effect. Its latent heat is more preferably 1 J/g or more, still more preferably 5 J/g or more, more preferably in a temperature range of -10 to 80°C, still more preferably 0 to 50°C.

### [Laminate]

The laminate of the present invention has a multilayered structure with 2 or more layers, one layer of which is of the above film or sheet.

The laminate of the present invention is preferably produced by laminating the film or sheet on a base. The bases useful for the present invention include polyvinyl chloride (PVC) sheet, polyurethane sheet, fibrous cloth, cellulose, synthetic resin film (e.g., polyester or polypropylene film), non-woven fabric and paper.

The laminate of the present invention may contain, in addition to the film or sheet of the present invention and base, a binder layer, as required, between the base and film layer.

The process for producing the laminate of the present invention is not limited, and may be selected from the known ones. More specifically, the processes include knife coating, gravure coating, spraying and dipping.

Moreover, the laminate may be produced by the molding processes used for thermoplastic resins, e.g., common T-die, inflation, compression or calendaring molding, when the heat-accumulative composition contains polyvinyl chloride, polyamide, polypropylene, polyethylene, polystyrene, polyester resin or the like.

The laminate of the present invention may be also produced by putting the film or sheet of the present invention on another layer via a binder or the like.

The present invention can provide an excellent heat-accumulative film or sheet, and laminate less sensitive to ambient temperature changes, because it comprises the material or its composition high in heat-accumulative capacity.

The heat-accumulative film or sheet, and laminate of the present invention can find uses similar to those for the heat-accumulative material. They are particularly suitable for textiles, furniture and artificial leather for automobiles, among others.

For example, when a person who wears a textile product of the fiber cloth on which the film or sheet of the present invention is laminated enters a hot space, the polymer absorbs the latent heat to prevent temperature rise of his clothes thereby protecting him more efficiently from the effect of ambient temperature. When he enters a cold space, the polymer generates the solidification heat to solidify and thereby to prevent temperature decrease of his clothes. Therefore, the heat-accumulative film or sheet, and laminate of the present invention can be used for the so-called textile product of temperature-controlling function, e.g., wear for cold weather or sporting.

Moreover, when used for furniture or leather for automobiles, they can moderate rate of temperature increase by human temperature at the portion coming into direct contact with the person, making him more comfortable in summer, as is the case with the heat-accumulative material.

### [Heat-accumulative composite fiber]

The heat-accumulative composite fiber of the present invention has a core/sheath structure, with the heat-accumulative material or composition for the core and a synthetic resin for the sheath.

The synthetic resins useful for the sheath of the heat-accumulative composite fiber of the present invention include polyamide, polyester, polyurethane, ethylene/vinyl acetate copolymer, polyvinylidene chloride, polyvinyl chloride, acrylic, polyethylene, ethylene vinyl alcohol copolymers, polyvinyl alcohol copolymers and polypropylene resins. They may be used either individually or in combination. Among them, polyester, polyacrylate and polyamide are more preferable.

The above resin can be easily spun together with the heat-accumulative material or composition of the present invention into the heat-accumulative composite fiber of core/sheath structure.

The heat-accumulative composite fiber of the present invention can be produced by spinning the heat-accumulative material or composition and synthetic resin by a known extruder type spinning machine for composite materials.

Spinning temperature varies depending on type of the fiber material used, but is normally in a range of around 180 to 350°C.

Content of the heat-accumulative material in the heat-accumulative composite fiber is preferably 0.5 to 70% by weight, more preferably 1 to 50% by weight.

The heat-accumulative composite fiber may contain, as required, one or more additives, e.g., moisture absorber, humectant and antistatic agent so far as an additive does not harm its characteristics.

The cross-sectional shape of the heat-accumulative composite fiber is not limited. It may be circular or non-circular, e.g., triangular or square.

Production of the heat-accumulative composite fiber involves no problem resulting from its evaporation, because the heat-accumulative material or composition as the starting material has a sufficiently high molecular weight. Moreover, since it is resin, it can be kneaded into another material and made into fibers. Further, it is easily subjected to processing such as continuous spinning and kneading. Therefore, the heat-accumulative composite fiber of the present invention is excellent in spinning characteristics and easily produced.

The heat-accumulative composite fiber, containing the heat-accumulative material in the core, generates the latent heat at the melting point of the heat-accumulative material. More specifically, it generates a latent heat preferably of 1 J/g or more, more preferably 5 J/g or more. If its latent heat is less than 1 J/g, it may not exhibit sufficient heat accumulative effect. Its latent heat is more preferably 1 J/g or more, still more preferably 5 J/g or more, more preferably in a temperature range of -10 to 80°C, still more preferably 0 to 50°C.

This characteristic allows the heat-accumulative composite fiber to fully exhibit the temperature-controlling function against changes of ambient temperature or the like.

Moreover, use of the heat-accumulative material or composition for the core allows the heat-accumulative material to be uniformly dispersed in the fiber, thereby controlling fluctuations of its tensile strength or the like. At the same time, use of the above synthetic resin for the sheath makes the fiber surface similar to that of the conventional synthetic fiber. Therefore, it is easily handled, because it can be processed by conventional methods for making cloth or knit, or dyeing.

### [Heat-accumulative cloth]

The heat-accumulative cloth of the present invention is composed of the heat-accumulative fiber, partly or totally.

It can be structurally in the form of cloth, knit, non-woven fabric or the like.

The heat-accumulative composite fiber may be combined with another type of fiber.

The heat-accumulative composite fiber of the present invention and the heat-accumulative cloth of the present invention comprising the fiber has a temperature-controlling function, like the above heat-accumulative material or the like, and is suitable for controlling temperature against body temperature by direct or indirect contact.

The heat-accumulative composite fiber and heat-accumulative cloth member comprising the fiber can be suitably used for textile products having a temperature-controlling function, like the heat-accumulative material or the like.

### [Molded article]

The molded article of the present invention is produced by forming the heat-accumulative material or composition into a shape. The molded articles include those produced by injection, blow, slash, calendering, extrusion, inflation, foaming or compression molding. The article can be molded by a known molding process.

The molded articles can be suitably used for various areas with their excellent heat-accumulative capacity, e.g., various energy-saving type parts and parts for preventing excessive heating or cooling, e.g., building materials (e.g., heat insulating boards, floor heating parts, temperature-retaining type toilet seats, and house walls, ceilings and floors); residential goods (e.g., heat-retaining tableware and bottles, furniture, bedclothes and beds); automobile parts (e.g., parts for air-conditioners, heat insulators, handles and shift knobs); electric/electronic appliance parts; heat-exchanger parts for TV sets and copiers; and heat transfer device parts (e.g., heat-retaining type transfer rolls and coolants for electronic parts).

The molded article of the present invention, comprises the composition incorporated with the heat-accumulative material. Thus when it comes into contact with an energy-containing object, its base melts at a low melting point so that it can control temperature rise of the base by the heat of fusion. When it is placed in a cold space, it generates the solidification heat to prevent temperature decrease.

The molded article and heat-accumulative composition of the present invention can exhibit the following effects, in addition to the above.
(1) They can be easily molded by the common plastic molding process, e.g., injection, blow, extrusion, calendering, foaming or compression molding.
(2) They comprise a high-molecular-weight heat-accumulative material to exhibit an excellent heat-accumulative function, because of limited evaporation of the heat-accumulative material.
(3) They can exhibit their heat-accumulative function in a daily service temperature range.
(4) Conventionally, for example, when a heat-accumulative material, e.g., paraffin, is used for floor heating, it should be contained in a container to prevent leakage. However, the heat-accumulative composition of the present invention can be molded into a plastic shape for a specific purpose unlike the conventional technique. Thus according to the present invention, various devices containing the heat-accumulative material have a simpler structure.
(5) They have a high cost merit, because they do not use an expensive material.

### EXAMPLES

The present invention is described by EXAMPLES, which by no means limit the present invention.

The properties were determined in EXAMPLES by the following methods.
(1) Molecular weight: Molecular weight as polystyrene was determined by a GPC analyzer (JASCO's) with tetrahydrofuran (hereinafter abbreviated to THF) as a solvent.
(2) Melting point, freezing point and latent heat: These properties were determined by differential scanning calorimetry (Perkin Elmer Japan's DSC-7), where 3 mg of the sample was heated or cooled at 10°C/minute.
(3) Kinematic viscosity: Kinematic viscosity (unit: mm²/s) of the molten sample was determined at 40°C, 50°C and 75°C in accordance with JIS K-2283.
(4) 5 weight % loss temperature: 5 weight % loss temperature was determined by a TG-DTA analyzer (Seiko Instruments Inc.) under conditions of 3g of samples and air flow rate of 300 ml/min.

### [Heat-accumulative materials]

### EXAMPLE 1

A decaglycerine-myristic acid (C14) reactant was synthesized by the following procedure.
(1) A 2L four-mouthed separable flask was equipped with a nitrogen supply tube, stirrer and Dean and Stark mist separator. The mist separator was warmed at 60 to 70°C.
(2) To the flask were charged 310g of decaglycerine and 1,090g of myristic acid (solid).
(3) Nitrogen was slowly fed into the flask and heated by a mantle heater with slowly stirring to dissolve the solid.
(4) After the solid was dissolved to a uniform solution, the temperature of heater was gradually raised and stirring was continued. Water begun to flow at about 160 to 170°C and simultaneously myristic acid appeared in a trap. Water was then removed to avoid solidification of the acid which may result in clog. At this state, the reaction was continued by adjusting the inner temperature to about 180°C.
(5) After 5 to 6 hours, the temperature of the heater was raised until the inner temperature became about 240°C, and then the stirring was continued for 2 to 3 hours.
(6) When water did not distilled, the mist separator was replaced with a reduced-pressure distiller to remove light parts under about 20 mmHg.
(7) The flask was detached from the heater and cooled to about 80°C with stirring.
(8) The content was placed on a metallic pad and further cooled to solidify. The solid was crushed to obtain 1,210g of flake-like solids.

NMR analysis revealed that average 10 units of myristic acids were connected to 12 reactive points of decaglycerine units via ester bonds. The analytical data are given in Table 1 (n=14).

**Table 1**

| Chemical shift (ppm) | Number of protons | Relevant to: |
|---|---|---|
| 0.88 (triplet) | 30 | Carboxylic acid CH₃ |
| 1.25 (broad) | 20x(n-4) | Carboxylic acid CH₂×(n-4) |
| 1.60 (broad) | 20 | Carboxylic acid CH₂ |
| 2.30 (broad) | 20 | Carboxylic acid CH₂ -C=O |
| 3.58 (broad) | 36 | Glycerol CH₂-O |
| 4.13 (broad) | 4 | Terminal glycerol CH₂-OC=O |
| 4.33 (broad) | | |
| 5.09 (broad) | 10 | Glycerol CH-OC=O CH-OH |
| 5.18 (broad) | | |

For the reactants obtained in Examples 2 (n=16), 3 (n=18) and 4 (n=22), NMR analysis was similarly conducted. As a result, chemical shift values similar to those of Table 1 were obtained, the strength of which varied depending on the number of carbon atoms.

It had a weight-average molecular weight of 2,750.

Its properties were measured and the results thereof are shown in Table 2.

For reference, the properties of octadecane are also shown.

### EXAMPLE 2

A decaglycerine-palmitic acid (C16) reactant was synthesized in the same manner as in EXAMPLE 1, except that myristic acid was replaced by palmitic acid.

It had a weight-average molecular weight of 2,899.

Its properties were measured. The results are given in Table 2.

### EXAMPLE 3

A decaglycerine-stearic acid (C18) reactant was synthesized in the same manner as in EXAMPLE 1, except that myristic acid was replaced by stearic acid.

It had a weight-average molecular weight of 3,151.

Its properties were measured. The results are given in Table 2.

### EXAMPLE 4

A decaglycerine-behenic acid (C22) reactant was synthesized in the same manner as in EXAMPLE 1, except that myristic acid was replaced by behenic acid.

It had a weight-average molecular weight of 3,396.

Its properties were measured. The results are given in Table 2.

### EXAMPLE 5

A decaglycerine-lauric acid (C12) reactant was synthesized in the same manner as in EXAMPLE 1, except that myristic acid was replaced by lauric acid.

It had a weight-average molecular weight of 1,927.

Its properties were measured. The results are given in Table 2.

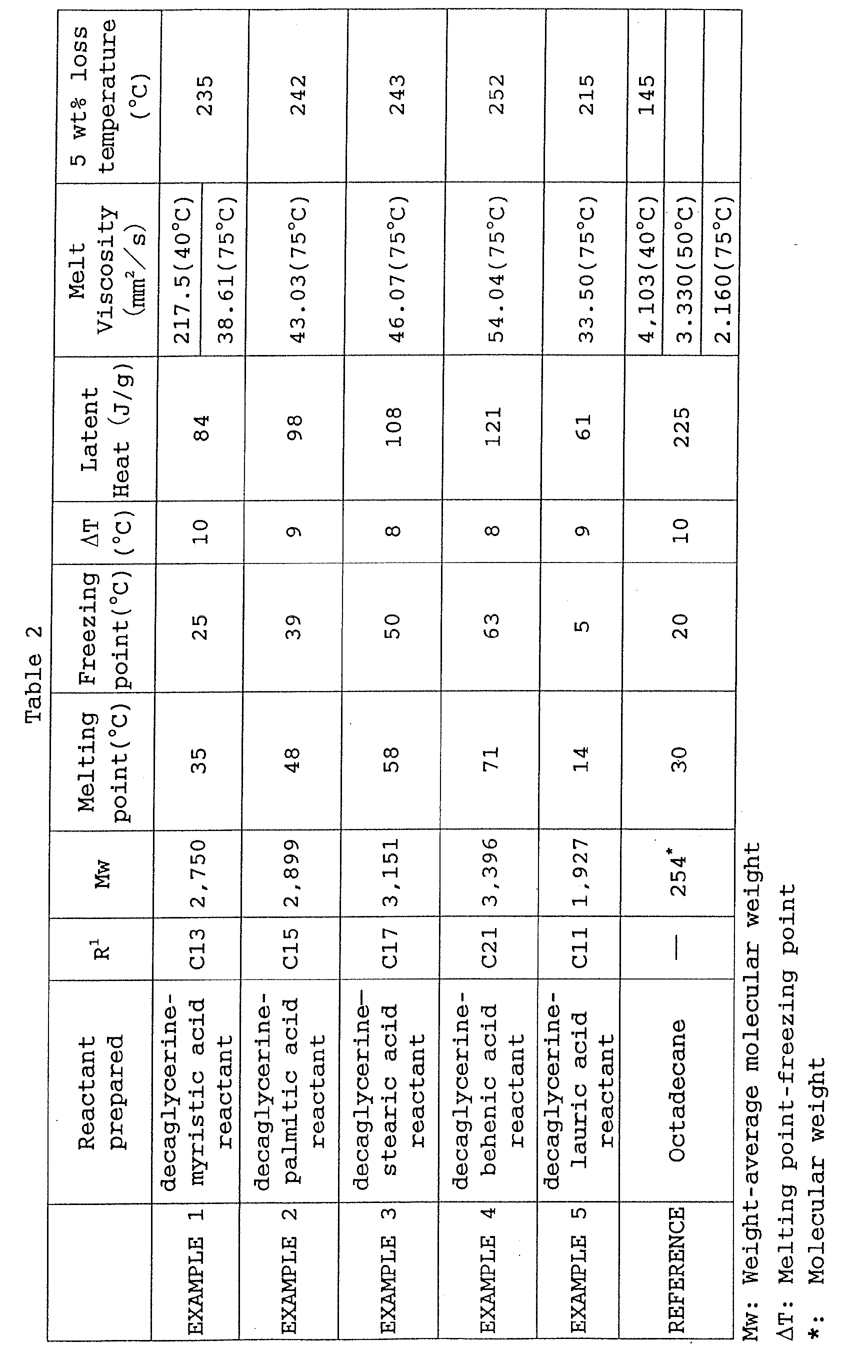

Octadecane as the reference compound is of low molecular weight, and hence when molten, they are too low in viscosity to be practical. Moreover, evaporation temperature (5% weight lose temperature) of octadecane is too low.

### Analytical Examples

The crystallized conditions of the side chains of the Reactants prepared in EXAMPLES 1 to 4 were analyzed by an X-ray diffractometer (Rigaku's Geigerflex). The regular peaks relevant to the distance between the side chains and side chain length were confirmed.

Their degrees of crystallization were found by the peak separation method. The results are given in Table 3.

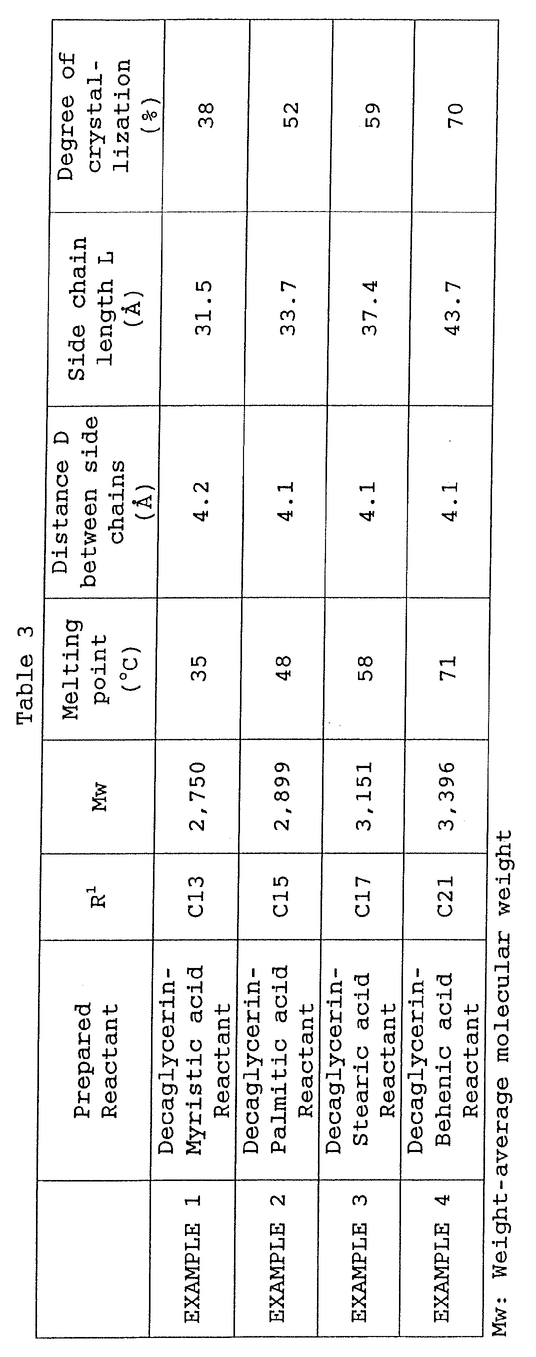

D: Distance between side chains
L: Side chain length

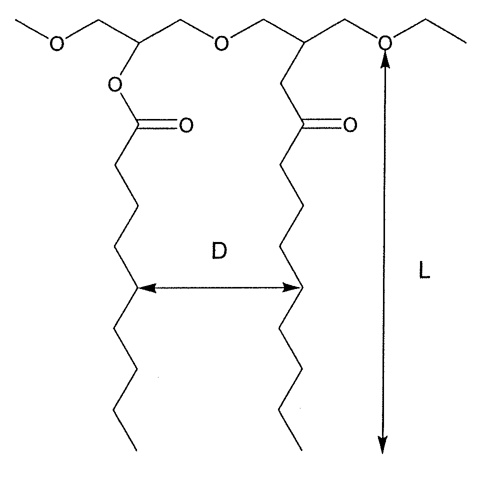

### [Sheets of heat-accumulative material]

### EXAMPLES 6 to 10 (EXAMPLES 31 to 35 of Japanese Patent Application No. 2003-067215)

Each of the heat-accumulative materials prepared in EXAMPLES 1 to 5 was spread by a coater and dried at 80°C on a releasing paper, and the releasing paper was separated to form a 100-µm-thick sheet.

Their melting points and latent heats ware the same as shown in Table 2.

### [Heat-accumulative composite fibers and cloths]

### EXAMPLES 11 to 15 (EXAMPLES 20 to 24 of Japanese Patent Application No. 2003-102450)

Polypropylene (IDEMITSU PP Y-2005GP) was incorporated with 30% by weight of the heat-accumulative materials prepared in EXAMPLE 1 to 5, and kneaded at 230°C by a double-screw extruder (PCM-30, made by Ikegai Iron Works, Ltd.) under a molten condition to prepare the heat-accumulative composition.

The heat-accumulative composition and Nylon 6 were spun by an extruder type composite spinning machine into the composite fibers. The spinning process was carried out to separately melt the heat-accumulative composition and Nylon 6 and discharge them via mouth pieces in such a way to form the composite fibers of core-sheath structure, with the former serving as the core and the latter for the sheath. They were thermally set by drawing rollers and wound to prepare the drawn fibers (heat-accumulative composite fibers), each 40 deniers in size and comprising 12 filaments.

The heat-accumulative composite fibers were wound around a urethane fiber to prepare single-covered type yarns, which were knitted by a circular knitting machine to prepare a knit (heat-accumulative cloth).

### COMPARATIVE EXAMPLE 1 (COMPARATIVE EXAMPLE 1 of Japanese Patent Application No. 2003-102450)

The 38-denier/12-filament drawn heat-accumulative composite fibers were prepared in the same manner as in EXAMPLE 11, except that the heat-accumulative composition used for the core was replaced by polypropylene, and formed into a knit as the heat-accumulative cloth also in the same manner.

### COMPARATIVE EXAMPLE 2 (COMPARATIVE EXAMPLE 2 of Japanese Patent Application No. 2003-102450)

The 70-denier/24-filament drawn heat-accumulative composite fibers were prepared in the same manner as in EXAMPLE 11, except that the heat-accumulative composition used for the core was replaced by Nylon 6 as the same material used for the sheath, and formed into a knit as the heat-accumulative cloth also in the same manner.

Each of the cloth prepared in EXAMPLES and COMPARATIVE EXAMPLES was cut into a 10-cm-square shape, which was wound around thermocouples to prepare a test sample.

The test sample was allowed to stand in an atmosphere kept at 20°C, and then transferred in an atmosphere kept at 50°C, to measure time required for the sample to reach 40°C determined by the thermocouples to evaluate temperature-controlling function of each cloth . The results are given in Table 4.

**Table 4**

| | Required time (minutes) |
|---|---|
| EXAMPLE 11 | 23 |
| EXAMPLE 12 | 13 |
| EXAMPLE 13 | 12 |
| EXAMPLE 14 | 11 |
| EXAMPLE 15 | 12 |
| COMPARATIVE EXAMPLE 1 | 7 |
| COMPARATIVE EXAMPLE 2 | 6 |

### [Molded articles]

### EXAMPLE 16 (EXAMPLE 5 of Japanese Patent Application No. 2002-329394)

A mixture of 70 parts by weight of polypropylene resin (IDEMITSU PP J466H (trade name), made by Idemitsu Petrochemical Co., Ltd., melting point: 158°C, PP) and 30 parts by weight of the decaglycerin-myristic acid Reactant prepared in EXAMPLE 1 by dry blending, and kneaded at 200°C by a 35mm-diameter extruder (made by Ikegai Iron Works, Ltd.) to prepare the heat-accumulative PP composition.

A compression-molded article of the heat-accumulative PP composition prepared was prepared by a process where 45 g of the PP composition, held by a 1-mm-thick, 20-cm-square frame, was pre-heated at 200°C for 10 minutes, degassed, pressed at 16 MPaG for 2 minutes, and cooled at 10 MPa by a cooling press operating at room temperature. In this process, a commonly used PET film was used for mold releasing, and 1-mm-thick aluminum plates were put on the upper and lower sides of the frame.

Content of heat-accumulative material in the molded article and Latent heat are 30wt% and 20J/g respectively.

### Industrial Applicability

The present invention can provide a heat-accumulative material, heat-accumulative composition, and heat-accumulative film or sheet, laminate, molded article, composite fiber and cloth using the material or composition, which are easily produced and molded and have excellent heat-accumulative capacity.

## Claims

1. A heat-accumulative material which is a polymer or oligomer having, as a main constituent component, units having a polyether main chain and a side chain, side chains capable of being crystallized.

2. The heat-accumulative material according to claim 1, wherein the unit is represented by formula (1) or (2), 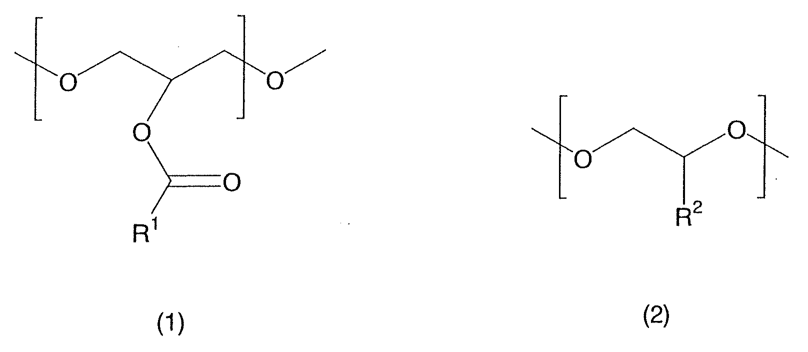 wherein R¹ is at least one selected from hydrocarbon groups having 11 or more carbon atoms and R² is at least one selected from hydrocarbon groups having 14 or more carbon atoms.

3. The heat-accumulative material according to claim 2, wherein R¹ or R² is a straight-chain alkyl group.

4. The heat-accumulative material according to claim 1, whose melting point is from -10°C to 100°C and latent heat is at least 30 J/g.

5. The heat-accumulative material according to claim 1, wherein difference between the melting point and the solidifying point of the material is at most 15°C.

6. The heat-accumulative material according to claim 1, whose 5 weight % loss temperature in the air measured by a TG-DTA analyzer is 200°C or more.

7. The heat-accumulative material according to claim 1, wherein the weight-average molecular weight Mw of the polymer or oligomer is from 1,000 to 2,000,000.

8. A heat-accumulative composition comprising the heat-accumulative material of claim 1 and a synthetic resin.

9. The heat-accumulative composition according to claim 8, wherein the synthetic resin is at least one selected from the group of polyurethane, acrylic, polyamide, polyvinyl chloride, polypropylene, polyethylene, polystyrene, polyester, polycarbonate, ethylene/vinyl alcohol copolymer, thermoplastic elastomer, polyphenylene sulfide, polyvinyl alcohol copolymers and ABS resins.

10. A heat-accumulative film or sheet comprising the material of claim 1; or the composition of claim 8.

11. A heat-accumulative laminate comprising the film or sheet of claim 10 as one layer.

12. A heat-accumulative composite fiber comprising a core and a sheath; the core comprising the material of claim 1; or the composition of claim 8; the sheath comprising a synthetic resin.

13. The heat-accumulative composite fiber according to claim 12, wherein the synthetic resin is at least one selected from the group of polyamide, polyester, polyurethane, ethylene/vinyl acetate copolymer, polyvinylidene chloride, polyvinyl chloride, acrylic, polyethylene, ethylene vinyl alcohol copolymers, polyvinyl alcohol copolymers and polypropylene resins.

14. A heat-accumulative cloth comprising the composite fiber of claim 12.

15. A heat-accumulative molded article comprising the material of claim 1; or the composition of claim 8.

16. The heat-accumulative molded article according to claim 15, which is an energy-saving part or a part for preventing excessive heating or cooling.

17. The heat-accumulative molded article according to claim 15, which is a building material, residential good, automobile part, electric/electronic appliance part, heat-exchanger part, heat exchange medium or heat transfer device part.
